# EUROPEAN PATENT APPLICATION

(11) **EP 2 698 954 A1**
(43) Date of publication of application: **19.02.2014**
(21) Application number: 12777743.1
(22) Date of filing: 17.04.2012
(51) Int. Cl.: H04L 12/56, H04L 29/12

(54) **MESSAGE FILTERING METHOD AND ACCESS DEVICE**

(30) Priority: 28.04.2011 CN 201110115531
(71) Applicant: Huawei Technologies Co., Ltd., Shenzhen, Guangdong 518129 (CN)
(72) Inventor: ZHENG, Yu, Shenzhen Guangdong 518129 (CN)
(74) Representative: Maiwald Patentanwalts GmbH
(86) International application number: PCT/CN2012/074166
(87) International publication number: WO 2012/146139

(57) **Abstract**

A packet filtering method and an access device are disclosed, and relate to network communication technologies. A technical solution provided in embodiments of the present invention includes the following: Firstly, a hardware forwarding plane or a user port in an access device receives a packet from an uplink node; secondly, the hardware forwarding plane queries, according to an IP address of a downlink destination node in the packet, a mapping table to determine a user port corresponding to the downlink destination node, and sends the packet to the downlink destination node through the corresponding user port; or, the user port queries an access user table for whether the user port corresponds to an IP address of a downlink destination node in the packet, and if so, the user port sends the packet to the downlink destination node, or if not, the port discards the packet. By querying a mapping table or an access user table, it is ensured that the packet can only be sent to a corresponding user equipment through a user port corresponding to a downlink destination node. This avoids a waste of bandwidth resources, and meanwhile reduces the number of unnecessary broadcast packets, thereby enhancing the security of a network.

## Description

This application claims priority to Chinese Patent Application No. 201110115531.1, filed with the Chinese Patent Office on April 28, 2011 and entitled "PACKET FILTERING METHOD AND ACCESS DEVICE", which is incorporated herein by reference in its entirety.

### TECHNICAL FIELD

The present invention relates to the field of communications, and in particular, to a packet filtering method and an access device.

### BACKGROUND

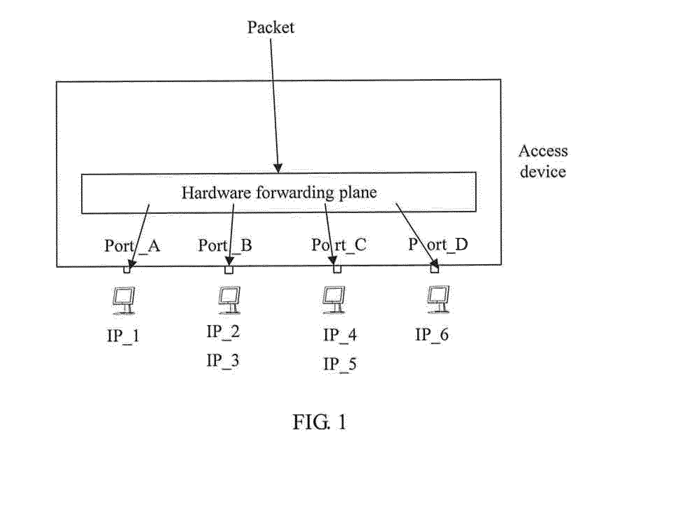

Currently, when an access device receives from an uplink node an ARP broadcast request packet or a unicast IP packet for which no layer 2 forwarding entry is found according to a destination MAC, the access device always performs layer 2 forwarding according to vlan+mac, and broadcasts the packet to all downlink nodes of the access device by using a hardware forwarding plane. For example, as shown in FIG. 1, if the uplink node sends an ARP request packet to a downlink destination node whose IP address is IP_1, because a destination MAC is a broadcast address, the hardware forwarding plane broadcasts the ARP request packet to all ports (that is, Port_A, Port_B, Port_C, and Port_D), and all the ports send the ARP request packet to all downlink nodes connected to the ports (including the downlink destination node whose IP address is IP_1, a downlink node whose IP address is IP_2, a downlink node whose IP address is IP_3, a downlink node whose IP address is IP_4, a downlink node whose IP address is IP_5, and a downlink node whose IP address is IP_6). However, the request packet needs to be forwarded to only the downlink destination node whose IP address is IP_1 in Port_A, and downlink nodes connected to Port_B, Port_C, and Port_D do not need to receive the request packet. As a result, downlink nodes that do not need the packet also receive the packet, hence occupying bandwidth resources and generating a large number of junk packets.

### SUMMARY

Embodiments of the present invention provide a packet filtering method and an access device, so that a packet sent from an uplink node can only be sent to a corresponding user equipment, thereby avoiding a waste of bandwidth resources.

An embodiment of the present invention provides a packet filtering method, including:
receiving, by a hardware forwarding plane, a packet from an uplink node, where the packet is an Address Resolution Protocol ARP broadcast request packet or an IP packet for which no layer 2 forwarding entry is found according to a destination MAC and the packet includes an IP address of a downlink destination node;
querying, by the hardware forwarding plane according to the IP address of the downlink destination node in the packet, a mapping table to determine a user port corresponding to the downlink destination node, where the mapping table includes mapping relationships between user ports in an access device and IP addresses of downlink nodes connected to the user ports; and
sending, by the hardware forwarding plane, the packet from the uplink node to the downlink destination node through the corresponding user port.

An embodiment of the present invention provides an access device, including:
a receiver, configured to receive a packet from an uplink node, where the packet is an Address Resolution Protocol ARP broadcast request packet or an IP packet for which no layer 2 forwarding entry is found according to a destination MAC and the packet includes an IP address of a downlink destination node;
a port determining unit, configured to query, according to the IP address of the downlink destination node in the packet, a mapping table to determine a user port corresponding to the downlink destination node, where the mapping table includes mapping relationships between user ports in the access device and IP addresses of downlink nodes connected to the user ports; and
a transmitter, configured to send the packet from the uplink node to the downlink destination node through the corresponding user port determined by the port determining unit.

An embodiment of the present invention also provides a packet filtering method, including:
receiving, by a user port in an access device, a packet from a hardware forwarding plane, where the packet is an Address Resolution Protocol ARP broadcast request packet or an IP packet for which no layer 2 forwarding entry is found according to a destination MAC and the packet includes an IP address of a downlink destination node; and
querying, by the user port in the access device, an access user table for whether the user port corresponds to the IP address of the downlink destination node in the packet, and if so, sending the packet to the downlink destination node, or if not, discarding the packet, where the access user table includes a mapping relationship between the user port and an IP address of a downlink node connected to the user port or the access user table includes mapping relationships between all user ports in the access device and IP addresses of downlink nodes connected to the user ports.

An embodiment of the present invention also provides an access device, including:
a receiving module, configured to receive a packet from a hardware forwarding plane, where the packet is an Address Resolution Protocol ARP broadcast request packet or an IP packet for which no layer 2 forwarding entry is found according to a destination MAC and the packet includes an IP address of a downlink destination node;
a judging module, configured to query an access user table for whether a user port corresponds to the IP address of the downlink destination node in the packet, and if so, instruct a transmitter to send the packet, or if not, discard the packet, where the access user table includes a mapping relationship between the user port and an IP address of a downlink node connected to the user port or the access user table includes mapping relationships between all user ports in the access device and IP addresses of downlink nodes connected to the user ports; and
the transmitter, configured to send, according to the instruction of the judging module, the packet received by the receiving module to the downlink destination node.

According to the foregoing technical solutions provided in the embodiments of the present invention, by querying a mapping table or an access user table, it is ensured that a packet can only be sent to a corresponding user equipment through a user port corresponding to a downlink destination node. This avoids a waste of bandwidth resources, and meanwhile reduces the number of unnecessary broadcast packets, thereby enhancing the security of a network.

### BRIEF DESCRIPTION OF DRAWINGS

To illustrate the technical solutions in the embodiments of the present invention more clearly, the accompanying drawings required for describing the embodiments are briefly described in the following. Apparently, the accompanying drawings in the following description show merely some embodiments of the present invention, and those skilled in the art in the art may still derive other drawings from these accompanying drawings without creative efforts.
FIG. 1 is a schematic diagram of transmission of an ARP broadcast request message or a unicast IP packet in the prior art;
FIG. 2 is a schematic flowchart of a packet filtering method according to an embodiment of the present invention;
FIG. 3 is a schematic structural diagram of an access device according to an embodiment of the present invention;
FIG. 4 is a schematic flowchart of another packet filtering method according to an embodiment of the present invention;
FIG. 5 is a schematic structural diagram of an access device according to an embodiment of the present invention; and
FIG. 6 is a schematic diagram of transmission of an ARP broadcast request message or a unicast IP packet according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by those skilled in the art in the art based on the embodiments of the present invention without creative efforts shall fall within the protection scope of the present invention.

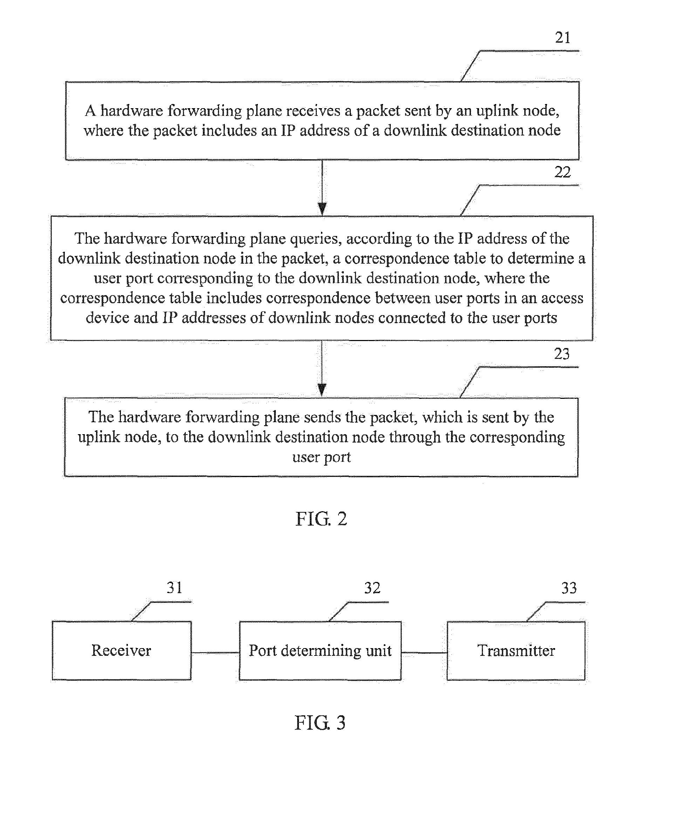

An embodiment of the present invention provides a packet filtering method, as shown in FIG. 2, including the following steps:

21. A hardware forwarding plane receives a packet from an uplink node, where the packet includes an IP address of a downlink destination node.

Specifically, the packet may be an Address Resolution Protocol (ARP) broadcast request packet or an IP packet for which no layer 2 forwarding entry is found according to a destination MAC (Media Access Control, media access control).

22. The hardware forwarding plane queries, according to the IP address of the downlink destination node in the packet, a mapping table to determine a user port corresponding to the downlink destination node, where the mapping table includes mapping relationships between user ports in an access device and IP addresses of downlink nodes connected to the user ports.

Further, the foregoing mapping table may be sent by a CPU in the access device to the hardware forwarding plane, or be reported earlier by a downlink node. If the mapping relationships between user ports in the access device and IP addresses of downlink nodes connected to the user ports are shown in FIG. 1, the mapping table may include:

| User Port | IP Address | |
|---|---|---|
| Port_A | IP_1 | |
| Port_B | IP_2 | IP_3 |
| Port_C | IP_4 | IP_5 |
| Port_D | IP_6 | |

23. The hardware forwarding plane sends the packet from the uplink node to the downlink destination node through the corresponding user port.

Specifically, for example, if the uplink node sends an ARP request packet to a downlink destination node whose IP address is IP_1, the hardware forwarding plane queries the mapping table to determine that a user port in the access device corresponding to IP_1 is Port_A. Therefore, the hardware forwarding plane sends the ARP request packet to the downlink destination node through Port_A.

An embodiment of the present invention also provides an access device, where the access device may be a hardware forwarding plane, as shown in FIG. 3, including:
a receiver 31, configured to receive a packet from an uplink node, where the packet is an Address Resolution Protocol ARP broadcast request packet or an IP packet for which no layer 2 forwarding entry is found according to a destination MAC and the packet includes an IP address of a downlink destination node;
a port determining unit 32, configured to query, according to the IP address of the downlink destination node in the packet received by the receiving unit 31, a mapping table to determine a user port corresponding to the downlink destination node, where the mapping table includes mapping relationships between user ports in the access device and IP addresses of downlink nodes connected to the user ports; and
a transmitter 33, configured to send the packet from the uplink node to the downlink destination node through the corresponding user port determined by the port determining unit 32.

Optionally, the foregoing access device may further include a memory configured to store the mapping table. The mapping table may be sent by a CPU in the access device to the hardware forwarding plane, or be reported earlier by a downlink node.

The specific implementation of processing functions of each unit or each component included in the access device is already described in the foregoing method embodiment, and is not further described herein.

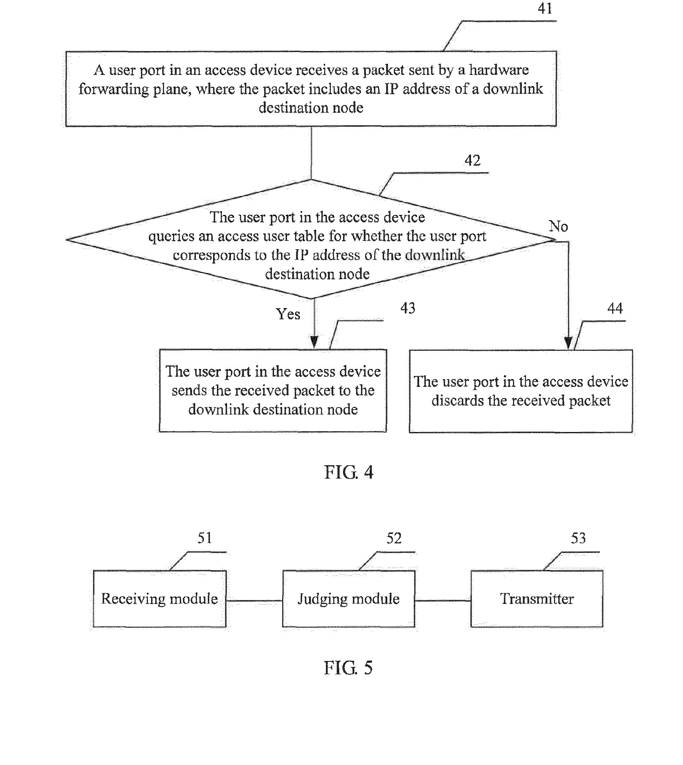

An embodiment of the present invention also provides a packet filtering method, as shown in FIG. 4, including the following steps:

41. A user port in an access device receives a packet from a hardware forwarding plane, where the packet includes an IP address of a downlink destination node.

Specifically, the packet may be an Address Resolution Protocol (ARP) packet or an IP packet for which no layer 2 forwarding entry is found according to a destination MAC.

42. The user port in the access device queries an access user table for whether the user port corresponds to the IP address of the downlink destination node in the packet, and if so, step 43 is performed, or if not, step 44 is performed, where the access user table includes a mapping relationship between the user port and an IP address of a downlink node connected to the user port or the access user table includes mapping relationships between all user ports in the access device and IP addresses of downlink nodes connected to the user ports.

Further, the foregoing access user table may be manually configured or be reported earlier by a downlink node in the user port. Alternatively, the access user table may be sent by a CPU in the access device to each user port. If the mapping relationships between user ports in the access device and IP addresses of downlink nodes connected to the user ports are shown in FIG. 1, all access user tables of user ports Port_A, Port_B, Port_C, and Port_D in the access device may be as follows:

| User Port | IP Address | |
|---|---|---|
| Port_A | IP_1 | |
| Port_B | IP_2 | IP_3 |
| Port_C | IP 4 | IP_5 |
| Port_D | IP_6 | |

Or, the access user table of a user port Port_A in the access device is as follows:

| User Port | an IP Address |
|---|---|
| Port_A | IP_1 |

The access user table of a user port Port_B in the access device is as follows:

| User Port | IP Address | |
|---|---|---|
| Port_B | IP_2 | IP_3 |

The access user table of a user port Port_C in the access device is as follows:

| User Port | IP Address | |
|---|---|---|
| Port_C | IP_4 | IP_5 |

The access user table of a user port Port_A in the access device is as follows:

| User Port | IP Address |
|---|---|
| Port_D | IP_6 |

43. The user port in the access device sends the received packet to the downlink destination node.

44. The user port in the access device discards the received packet.

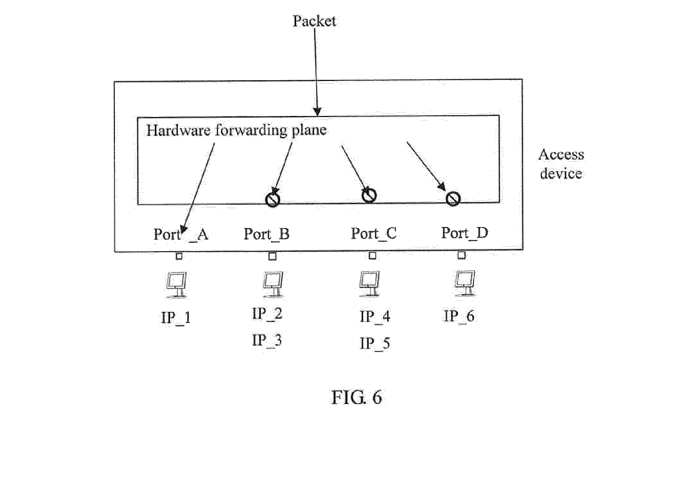

Specifically, as shown in FIG 6, if an uplink node sends an ARP request packet to a downlink destination node whose IP address is IP_1, a hardware forwarding plane sends the ARP request packet to user ports Port_A, Port_B, Port_C, and Port_D in an access device respectively; after receiving the ARP packet, each user port queries an access user table to determine whether the user port corresponds to the downlink node whose IP address is IP_1. At this time, only the user port Port_A finds that Port_A corresponds to the downlink destination node whose IP address is IP_1, and therefore the user port Port_A sends the ARP request packet to the downlink destination node, while user ports Port_B, Port_C, and Port_D discard the ARP request packet.

An embodiment of the present invention provides an access device, where the access device may be a user port in the access device, as shown in FIG. 5, including:
a receiving module 51, configured to receive a packet from a hardware forwarding plane, where the packet is an Address Resolution Protocol ARP broadcast request packet or an IP packet for which no layer 2 forwarding entry is found according to a destination MAC and the packet includes an IP address of a downlink destination node;
a judging module 52, configured to query an access user table for whether a user port corresponds to the IP address of the downlink destination node in the packet, and if so, instruct a transmitter to send the packet 53, or if not, discard the packet, where the access user table includes a mapping relationship between the user port and an IP address of a downlink node connected to the user port or the access user table includes mapping relationships between all user ports in the access device and IP addresses of downlink nodes connected to the user ports; and
the transmitter 53, configured to send, according to the instruction of the judging module 52, the packet received by the receiving module 51 to the downlink destination node.

Optionally, the foregoing access device may further include a memory configured to store the access user table. The foregoing access user table may be manually configured or be reported earlier by a downlink node in the user port, or be sent by a CPU in the access device to each user port.

The specific implementation of processing functions of each module included in the foregoing access device is already described in the foregoing method embodiment, and is not further described herein.

In the foregoing embodiment, the packet includes but is not limited to the IP address of the downlink destination node, and other identity information of the downlink destination node that can correspond to a user port in the access device may also be implemented by using the method provided in the embodiment of the present invention. Embodiments of the present invention are also not limited to the application in the access device.

In embodiments of the present invention, a hardware forwarding plane sends, by querying a mapping table, an ARP request packet or an IP packet for which no layer 2 forwarding entry is found according to a destination MAC to only a downlink destination node that needs the packet; by querying an access user table, a user port in an access device does not send an ARP request packet or an IP packet for which no layer 2 forwarding entry is found according to a destination MAC to downlink destination nodes that do not need the packet. The foregoing technical solutions both implement packet filtering, and avoid a waste of bandwidth resources. In addition, the technical solutions reduce the number of unnecessary broadcast packets, thereby enhancing the security of a network and reducing the possibility of attacks initiated by a malicious user to other users in the network.

It should be noted that the units, or components, or modules included in the foregoing access device embodiments are divided only according to function logic. However, the division is not limited thereto so long as corresponding functions can be implemented. In addition, the specific name of each functional unit or module is only for the convenience of differentiation and is not intended to limit the protection scope of the present invention.

In addition, it is understandable to those skilled in the art that all or a part of the steps in the methods provided in the preceding embodiments may be performed by hardware instructed by a program. The program may be stored in a computer readable storage medium, where the storage medium may be a read only memory, a magnetic disk, or an optical disk, and the like.

The above descriptions are merely exemplary embodiments of the present invention, but not intended to limit the protection scope of the present invention. Any modification or replacement that can be easily thought of by those skilled in the art without departing from the technical scope of the present invention should fall within the protection scope of the present invention. Therefore, the protection scope of the present invention is subject to the protection scope of the claims.

## Claims

1. A packet filtering method, comprising:
receiving, by a hardware forwarding plane, a packet from an uplink node, wherein the packet is an Address Resolution Protocol ARP broadcast request packet or an IP packet for which no layer 2 forwarding entry is found according to a destination MAC and the packet comprises an IP address of a downlink destination node;
querying, by the hardware forwarding plane according to the IP address of the downlink destination node in the packet, a mapping table to determine a user port corresponding to the downlink destination node, wherein the mapping table comprises mapping relationships between user ports in an access device and IP addresses of downlink nodes connected to the user ports; and
sending, by the hardware forwarding plane, the packet from the uplink node to the downlink destination node through the corresponding user port.

2. The method according to claim 1, wherein the mapping table is sent by a CPU in the access device or the mapping table is reported earlier by a downlink node.

3. An access device, comprising:
a receiver, configured to receive a packet from an uplink node, wherein the packet is an Address Resolution Protocol ARP broadcast request packet or an IP packet for which no layer 2 forwarding entry is found according to a destination MAC and the packet comprises an IP address of a downlink destination node;
a port determining unit, configured to query, according to the IP address of the downlink destination node in the packet, a mapping table to determine a user port corresponding to the downlink destination node, wherein the mapping table comprises mapping relationships between user ports in the access device and IP addresses of downlink nodes connected to the user ports; and
a transmitter, configured to send the packet from the uplink node to the downlink destination node through the corresponding user port determined by the port determining unit.

4. The access device according to claim 3, further comprising:
a memory, configured to store the mapping table, wherein the mapping table is sent by a CPU in the access device or the mapping table is reported earlier by a downlink node.

5. A packet filtering method, comprising:
receiving, by a user port in an access device, a packet from a hardware forwarding plane, wherein the packet is an Address Resolution Protocol ARP broadcast request packet or an IP packet for which no layer 2 forwarding entry is found according to a destination MAC and the packet comprises an IP address of a downlink destination node; and
querying, by the user port in the access device, an access user table for whether the user port corresponds to the IP address of the downlink destination node in the packet, and if so, sending the packet to the downlink destination node, or if not, discarding the packet, wherein the access user table comprises a mapping relationship between the user port and an IP address of a downlink node connected to the user port or the access user table comprises mapping relationships between all user ports in the access device and IP addresses of downlink nodes connected to the user ports.

6. The method according to claim 5, wherein the access user table is manually configured or the access user table is reported earlier by a downlink node.

7. An access device, comprising:
a receiving module, configured to receive a packet from a hardware forwarding plane, wherein the packet is an Address Resolution Protocol ARP broadcast request packet or an IP packet for which no layer 2 forwarding entry is found according to a destination MAC and the packet comprises an IP address of a downlink destination node;
a judging module, configured to query an access user table for whether a user port corresponds to the IP address of the downlink destination node in the packet, and if so, instruct a transmitter to send the packet, or if not, discard the packet, wherein the access user table comprises a mapping relationship between the user port and an IP address of a downlink node connected to the user port or the access user table comprises mapping relationships between all user ports in the access device and IP addresses of downlink nodes connected to the user ports; and
the transmitter, configured to send, according to the instruction of the judging module, the packet received by the receiving module to the downlink destination node.

8. The access device according to claim 7, further comprising:
a memory, configured to store the access user table, wherein the access user table is manually configured, or the access user table is reported earlier by a downlink node.
